# EUROPEAN PATENT SPECIFICATION

(11) **EP 2 128 484 B1**
(45) Date of publication and mention of the grant of the patent: **18.04.2012**
(21) Application number: 08009681.1
(22) Date of filing: 28.05.2008
(51) Int. Cl.: F16F 9/512

(54) **A hydraulic damper with an additional chamber assembly and a method of adjusting a damping characteristic of such a damper**
Hydraulischer Stoßdämpfer mit einer zusätzlichen Kammeranordnung und Verfahren zur Einstellung der Dämpfungseigenschaft eines derartigen Stoßdämpfers
Amortisseur hydraulique équipé d'un ensemble de chambre supplémentaire et procédé d'ajustement d'une caractéristique d'amortissement d'un tel amortisseur

(43) Date of publication of application: 02.12.2009
(73) Proprietor: BWI Company Limited S.A., 1628 Luxembourg (LU)
(72) Inventor: Slusarczyk, Pawel, 32-400 Myslenice (PL); Krazewski, Olaf, 34-120 Andrychow (PL); Knapczyk, Marcin, 31-261 Krakow (PL)
(74) Representative: Fox-Male, Nicholas Vincent Humbert

(56) References cited:
- EP-A- 1 152 166
- EP-A- 1 731 792
- DE-A1-102004 015 065
- FR-A- 1 323 746
- US-A1- 2005 230 202
- US-B1- 6 322 058

## Description

The present invention relates to a hydraulic damper, in particular a motor vehicle suspension damper, comprising a tube filled with working liquid, inside of which a slidable piston assembly with rebound and compression valve assemblies to control the flow of working liquid passing through the piston assembly during rebound and compression stroke of the damper is placed, which piston assembly is attached to a piston rod led outside the damper and divides the tube into main compression and main rebound chamber. The invention also relates to a method of adjusting a damping characteristic of a hydraulic damper of this kind.

Typical damper characteristic of damping force vs. piston velocity is a trade-off between improvement of the car handling properties and reduction of the unwanted car vibrations (a so called vibration isolation or NVH - Noise, Vibration, Harshness requirements). It is thus desirable to achieve different rates of piston damping force in dependence of the piston velocity, where for low piston velocities observable e.g. during vehicle cornering manoeuvres the damping force would increase rapidly, while for larger piston velocities observable e.g. when the vehicle travels over boulder paving the damper would provide smaller rates of increase of the damping force, providing a quasi sigmoid characteristic of damping force vs. piston velocity.

European patent publication EP 1152166 discloses a hydraulic damper comprising an additional chamber which is mounted on a piston rod and provided with a diaphragm or displaceable rigid disk. The diaphragm separates the chamber into additional compression and additional rebound chamber (subsidiary space) that are in hydraulic communication respectively with the main compression and the main rebound chamber by means of appropriate channels in the piston rod and the main piston assembly. The diaphragm or disc displaces in the chamber, handling vibrations with low amplitudes so that damping forces are weak. After further displacement is no longer possible, higher amplitudes are handled by the valves of the main piston assembly and attenuation is harder.

The Research Disclosure Journal of May 2004 (database number 481079) discloses a hydraulic damper in which the additional chamber further comprises two valve arrangements located between main and additional compression chamber as well as between main and additional rebound chamber. Each valve arrangement consists of at least one flexible disc having an orifice allowing continuous flow of fluid between main and additional chamber at a predetermined flow rate, which may bend if the increased flow rate is required. According to this solution the hydraulic fluid may flow between additional and main chambers without opening the regular valves of the of the main piston assembly until the volume of respective additional chamber is full and the floating piston cannot move further.

The solutions above implement a "damper in damper" approach also known as Amplitude Sensitive Damping (ASD), allowing to control damping performance at lower (chamber assembly) and higher (regular valves) excitation amplitudes independently. Other implementations of ASD systems and the like are disclosed in U.S. Patent Publication 2005/0230202 and German Patent Publication DE 10 2004 015 065.

Though the ASD system improves overall level of ride comfort, it may cause wheel road holding and body roll problems due to insufficient damping force, at low level of piston velocities.

An object of the present invention is to provide a hydraulic damper, which would be free of drawbacks of known solutions like wheel and body of a vehicle control problems, by providing sufficient damping at low stroking velocities e.g. during cornering manoeuvres and at the same time offering comfort advantages by isolating low amplitude impacts observable e.g. during highway driving.

Another object of the present invention is to provide a method of adjusting a damping characteristic of a hydraulic damper which would enable to lower the rate of increase of damping after reaching a predefined pressure engagement threshold corresponding to predefined piston velocity (e.g. 0.2 - 0.5 m/s) regardless of the piston assembly position, where said engagement threshold and said force reduction level might be easy to set.

In order to accomplish the aforementioned and other objects, a hydraulic damper of the kind mentioned in the outset, according to the present invention is provided with at least one chamber assembly with a floating piston separating the chamber assembly into additional compression chamber and additional rebound chamber and comprising at least one valve arrangement located between the main compression chamber and additional compression chamber and/or between the main rebound chamber and additional rebound chamber, wherein said valve arrangement comprises a blow-off valve, which upon activation after reaching a predefined pressure threshold opens the flow of fluid from said main to said additional chamber, and a check valve, which allows return flow of fluid from said additional to said main chamber.

Thanks to that, the chamber assembly is active only when the main piston velocity is high, e.g. while driving the vehicle on the boulder paving.

It is also advantageous if said at least one valve arrangement is a compression valve arrangement located between the main compression chamber and the additional compression chamber.

Preferably said at least one chamber assembly is fixed to the piston rod of the slidable piston assembly and said at least one valve arrangement is a rebound valve arrangement located between the main rebound chamber and the additional rebound chamber. This application is advantageous for mono-tube dampers.

In case of a twin-tube dampers a base valve assembly is located at the bottom of the internal tube of the damper and provided with separate rebound and compression valve assemblies to control the flow of working liquid passing in and out of the reservoir chamber formed between the inner and the outer tube of the damper.

In this case alternatively or additionally said at least one chamber assembly may be fixed to the base valve assembly.

Preferably said blow-off valve has a form of a compressed spring placed inside a sleeve located inside the additional chamber and acting upon a blow-off plate pressing it against at least one channel in the valve arrangement partition.

Preferably said check valve has a form of two discs, where the first disc rests over and closes at least one channel in the valve arrangement partition and the second resilient disc presses the first disc into a closed position.###

Preferably said chamber assembly comprises at least one sealing element. The sealing element has preferably the form of an O-ring and prevents inadvertent flow of working liquid between the main and the additional chamber.

According to the present invention there is also provided a method of adjusting a damping characteristic of a hydraulic damper described above, wherein
during the compression stroke said method comprises the step of enabling flow of fluid from the main compression chamber to the additional compression chamber after reaching a predefined pressure threshold in the main compression chamber, wherein said chambers remain fluidly connected during the return rebound stroke and/or
during the rebound stroke said method comprises the step of enabling flow of fluid from the main rebound chamber to the additional rebound chamber after reaching a predefined pressure threshold in the main rebound chamber, wherein said chambers remain fluidly connected during the return compression stroke
where
damping forces generated by the damper are reduced after reaching said predefined pressure threshold.

Preferably said engagement threshold and force reduction level are adjusted by means of the parameters of at least one blow-off valve, preferably selected from compressed blow-off spring force, blow-off plate surface and flow surface of a blow-off channel in the valve arrangement partition.

The principles and exemplary embodiments of the invention are presented below in connection with the attached drawings on which:
Fig. 1 is a schematic cross-sectional view of a part of a twin-tube hydraulic damper showing its main components and provided with a first embodiment of an additional chamber assembly according to the present invention;
Fig. 2 is an enlarged cross-sectional view of the first embodiment of an additional chamber assembly shown in Fig. 1;
Fig. 3 is a schematic cross-sectional view of an upper fragment of a mono-tube hydraulic damper showing its main components and provided with a second embodiment of an additional chamber assembly according to the present invention;
Fig. 4 is an enlarged cross-sectional view of the second embodiment of an additional chamber assembly shown in Fig. 3;
Fig. 5 shows force vs. piston velocity characteristic for typical damper, amplitude sensitive damper and exemplary mono-tube damper according to the present invention,
Fig. 6 shows a group of force vs. piston displacement characteristics for an exemplary mono-tube damper according to the present invention.

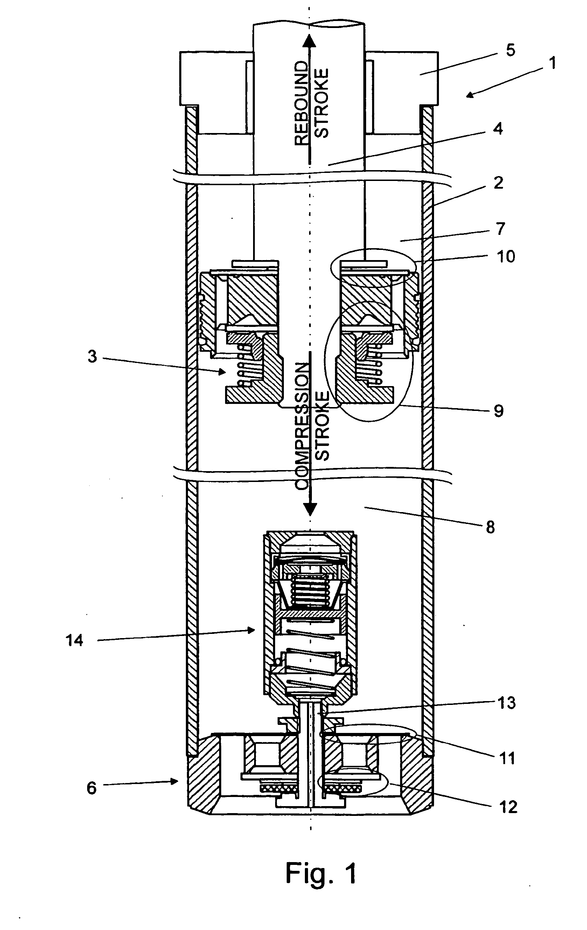

A hydraulic damper 1 shown in Fig. 1 is a twin-tube damper, wherein for the simplicity of the drawing only an internal tube 2 was shown. Inside the tube 2 filled with working liquid a movable piston assembly 3 (main piston) is placed. The piston assembly 3 is attached to a piston rod 4 led axially outside the damper 1 through a sealed piston rod guide 5. At the other end of the tube 2 a base valve assembly 6 is placed. The piston assembly 3 makes a sliding fit with the inner surface of the tube 2 and divides the tube 2 into a rebound chamber 7 and a compression chamber 8. The piston assembly 3 further comprises rebound and compression valve assemblies 9 and 10 with appropriate flow passages, to control the flow of working liquid passing through the piston assembly 3 during the rebound and the compression stroke of the damper 1. The base valve assembly 6 is also provided with rebound and compression valve assemblies 11 and 12 with appropriate flow passages, to control the flow of working liquid passing between the compression and the reservoir chamber (not shown in the drawing) which is typically formed between the inner 2 and the outer tube of the damper 1.

Further the damper 1 comprises an additional chamber assembly 14 placed inside the compression chamber 8 and screwed on the threaded end of the bolt 13 of the base valve assembly 6.

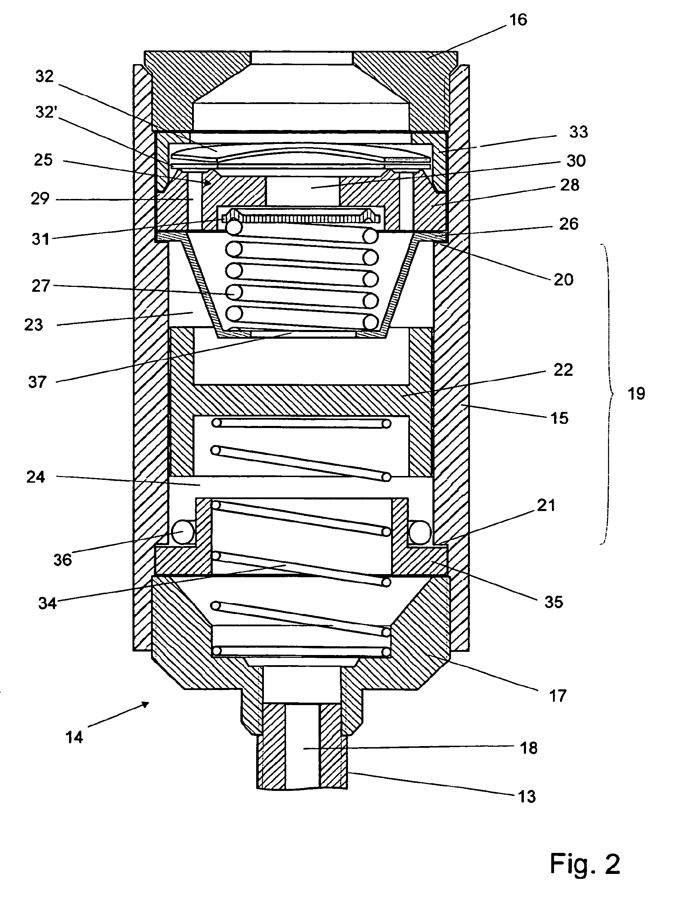

The construction of the chamber assembly 14 shall be now described in details with reference to Fig. 2. The chamber assembly 14 comprises a substantially cylindrical hollow main body 15 closed by hollow closing elements 16 and 17 provided with openings and screwed in the internally threaded ends of the body 15. To enable the flow of working liquid the threaded end of the bolt 13 of the base valve assembly 6 is provided with a channel 18.

Inside the body 15 a cylindrical section 19 delimited by circumferential shoulders 20 and 21 is defined. Inside the section 19 a floating piston 22 is located. The piston 22 is provided with a circumferential flange, the outer surface of which makes a sliding fit with the inner surface of the cylindrical section 19. The piston 22 separates the cylindrical section 19 of the body 15 into an additional compression chamber 23 and an additional rebound chamber 24, located respectively above and below the piston 22.

In the additional compression chamber 23 a valve arrangement 25 is placed. The valve arrangement 25 comprises a conical, convex sleeve 26 resting with its outer annular wall on the shoulder 20, a compressed blow-off spring 27 placed inside the sleeve 26, a valve arrangement partition 28 resting over the sleeve 26 and provided with a number of equiangularly spaced circumferential channels 29 and a central channel 30, a blow-off plate 31 pressed by the blow-off spring 27 to the valve arrangement partition 28, an intake check valve in a form of stack of two discs: the first bottom flat disc 32' resting over the channels 29 and the second, upper resilient, wave-shaped steel disc 32 bent between the first disc and the upper spacer sleeve 33. After screwing the closing element 16 down inside the body 15, the upper spacer sleeve 33, the partition 28 and the sleeve 26 are stacked one on the other and pressed against the annular shoulder 20 of the cylindrical section 19 into a stable position.

The additional rebound chamber 24 comprises a spring 34 located between the bottom closing element 17 and the floating piston 22, a shoulder sleeve 35 surrounding the spring 34 and pressed against the annular shoulder 21 into a stable position by the bottom closing element 17 after its screwing up inside the body 15, and a sealing element (o-ring) 36 surrounding the shoulder sleeve 35.

The valve arrangement 25 comprises two valves. The first blow-off valve is formed by the central channel 30 of the partition 28, the blow-off plate 31 and the blow-off spring 27, while the second intake check valve is formed by the discs 32, 32' and the circumferential channels 29.

In Fig. 2 the additional chamber assembly 14 is shown in the first inactive mode of operation in which the blow-off plate 31 closes the central channel 30 of the partition 28 under pressure of the blow-off spring 27. The floating piston 22 is in an intermediate position corresponding to slow velocities of the piston assembly 3 e.g. in the range of 0 to 0.2 m/s, where the whole flow of working liquid is directed through the regular valve assemblies of the piston assembly 3 and the base valve assembly 6.

After reaching certain piston velocity during its compression stroke the pressure of the working liquid acting on the upper surface of the blow-off plate exceeds the pressure of the blow-off spring 27. At this point the blow-off plate 31 uncovers the central channel 30 and the working liquid may flow to the additional compression chamber 23 displacing the floating piston 22 down.

The piston 22 is free to displace upon the increasing pressure in the chamber 23 until the whole volume of the additional chamber 23 is filled up with damping medium. At the end of the floating piston 22 stroke its circumferential flange enters a groove formed between the cylindrical section 19 and the shoulder sleeve 35, where the piston decelerates due to viscous damping and eventually touches the sealing element 36. The rate of this acceleration may be regulated by the width of the circumferential flange of the floating piston 23 and/or the width of a groove formed in the additional rebound chamber 24 at the end of the cylindrical section 19.

In this moment the additional chamber assembly 14 turns into the second inactive mode of operation and the flow of working liquid is directed again only through the regular valve assemblies 11 and 12 of the base valve assembly 6.

During the rebound stroke of the damper 1 the flow of fluid from the additional compression chamber 23 is directed back through the channels 29 and the discs 32, 32' of the open check valve under the pressure of the spring 34 and the fluid entering to the additional rebound chamber from the reservoir chamber through the channel 18 until the pressures equalise and the additional chamber assembly 14 returns to the first inactive mode of operation. Obviously the overall characteristic of the damper 1 depends also on the features of the valve assemblies 9, 10, 11 and 12 that provide further tuning options.

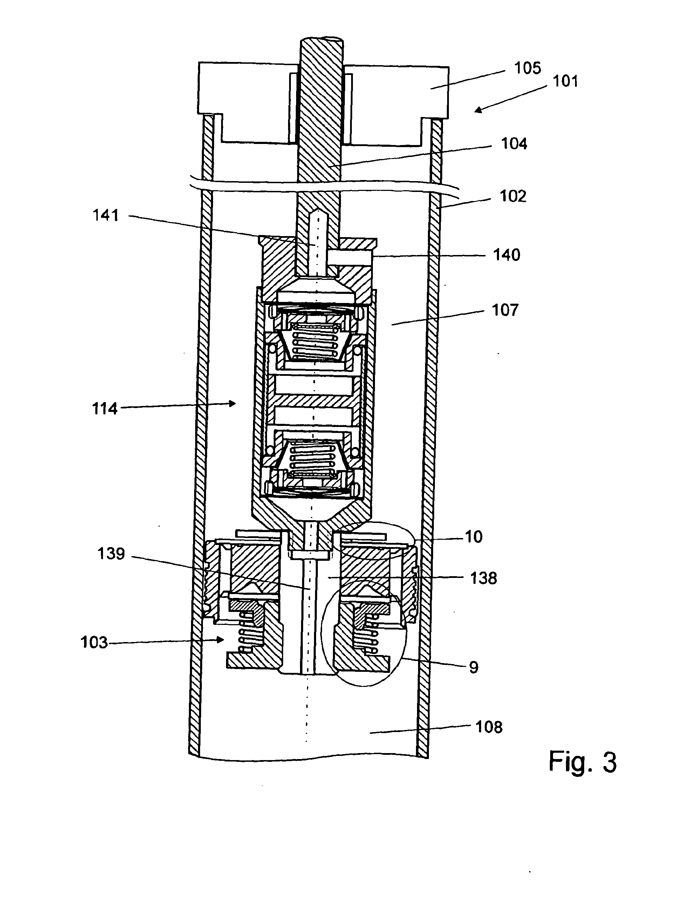

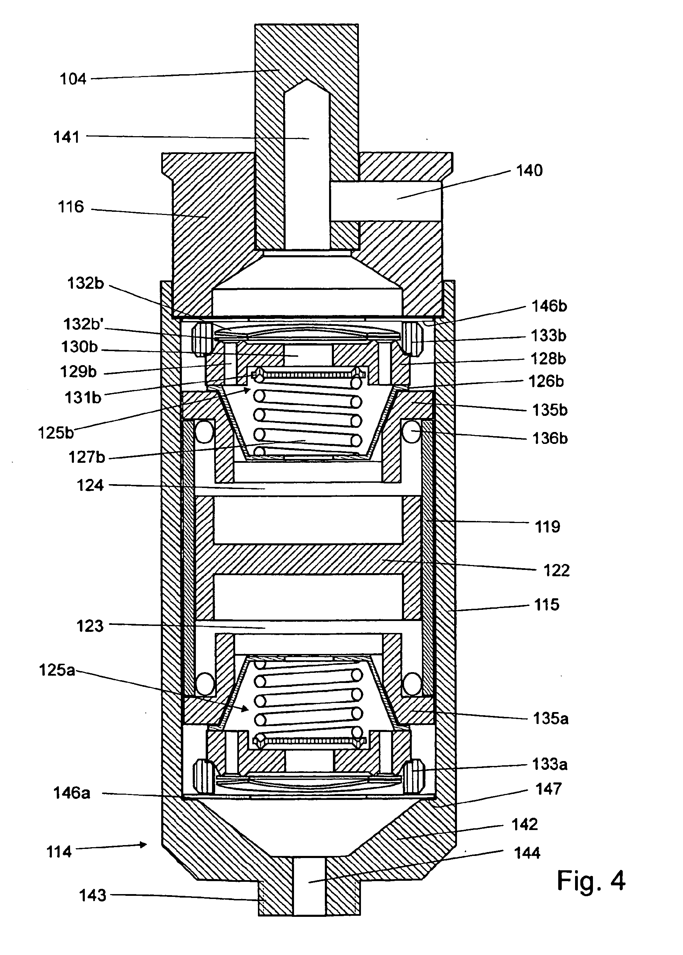

Fig. 3 and 4 show another embodiment of the damper according to the present invention. For the transparency of description 100 was added to the reference numerals of the same functional elements as shown in Fig. 1 and 2.

The hydraulic damper 101 shown in Fig. 3 is an example of a mono-tube damper, where for the simplicity of the drawing only an upper part of a damper tube 102 is shown. A movable piston assembly 103 is attached via an additional chamber assembly 114 to a piston rod 104 which is led axially outside the damper 101 through a sealed piston rod guide 105.

The construction of the chamber assembly 114 shall be described with reference to Fig. 4. As shown the chamber assembly 114 has a substantially cylindrical hollow main body 115 closed at the top by the hollow closing element 116 screwed in an internally threaded end of the body 115.

The additional chamber assembly 114 is placed inside the rebound chamber 107 of the damper 101. To this end the closing element 116 is provided with an internal thread for a treaded bottom end of the piston rod 104 and the central area of a bottom portion 142 of the body 115 extends into a bolt 143 provided with an external thread for the internally treaded upper end of a bolt 138 of the piston assembly 103.

Inside the body 115 a floating piston 122 is placed which divides the interior of the assembly 114 into additional compression chamber 123 and additional rebound chamber 124. The compression chamber 108 of the damper is fluidly connected with the chamber assembly 114 via a channel 144 in the bolt 143 of the bottom portion 142 of the body 115 and longitudinal channel 139 formed inside the bolt 138 of the piston valve assembly 103. The rebound chamber 107 of the damper 101 is fluidly connected with the chamber assembly 114 via a channel 141 formed inside the bottom end of the piston rod 104 and a channel 140 formed in the upper closing element 116.

In chambers 123 and 124 a compression valve arrangement 125a and a rebound valve arrangement 125b are placed. The arrangements are oriented in opposite directions and disposed at both sides of the floating piston 122. Since their constructions correspond to each other, further only the construction of the rebound valve arrangement 125b shall be explained.

The valve arrangement 125b comprises a conical, convex sleeve 126b, a compressed blow-off spring 127b placed inside the sleeve 126b, a valve arrangement partition 128b resting over the sleeve 126b and provided with a number of equiangularly spaced channels 129b and a central channel 130b, a blow-off plate 131 b pressed by the blow-off spring 127b to the valve arrangement partition 128b, an intake check valve having two discs 132b, 132b' resting over the channels 129b.

In comparison to the chamber assembly 14, in this case the convex sleeve 126b rests with its outer annular wall on upper surface of the upper shoulder sleeve 135b. The annular wall of the upper shoulder sleeve 135b in turn rests on the top edge of the cylindrical section 119 in a form of a spacing sleeve the outer surface of which is fitted to the internal surface of the hollow main body 115. The length of the cylindrical section 119 determines the movement range of the floating piston 122 which is provided with a circumferential flange with the outer surface making a sliding fit with the inner surface of the spacing sleeve 145.

A compression valve arrangement 125a is comprised of the similar components as the rebound valve arrangement 125b stacked in the reverse order. The arrangement 125a rests on the end plate 146a leaning against the annular shoulder 147 of the bottom portion 142. The annular wall of the bottom spacer sleeve 135a rests at the bottom edge of the cylindrical section 119.

After screwing the closing element 116 down inside the body 115 all components of the compression valve arrangement 125a and the rebound valve arrangement 125b are pressed via the cylindrical section 119 against the shoulder 147 forming a stable stack of suitably ordered individual elements ended on both sides by spacer sleeves 133a and 133b pressed against the end plates 146a, 146b.

Fig. 4 similarly as Fig. 2 illustrates the chamber assembly 114 in the first inactive mode of operation, corresponding to slow velocities of the piston assembly 103, where both blow-off valves 125a and 125b are closed and the flow of working liquid is directed only through the channels of the compression 10 and rebound 9 valve assemblies of the main piston 103.

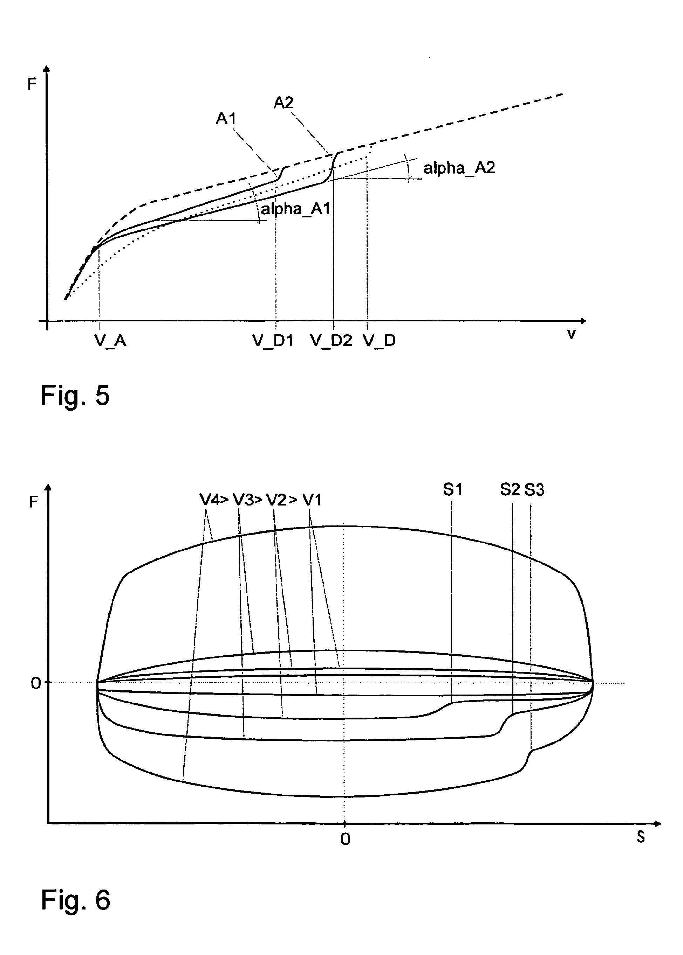

Fig. 5 schematically shows plots of damping force (F) according to some function of the piston velocity (V) during the compression stroke for three different mono-tube dampers.

The dashed line provided as a reference corresponds to a prior art damper without a chamber assembly but having a main piston provided with some valve assemblies enabling to substantially lower damping force increase rate after reaching some velocity engagement threshold.

The dotted line corresponds to a damper with a chamber assembly fixed to the piston rod and having additional chambers which are in constant fluid connection with main chambers above and below the main piston assembly. In this case the engagement threshold is undefined and damping slope is difficult to adjust. The disengagement threshold (V_D) corresponds to the moment when the floating piston reaches the end of the chamber assembly, and the whole volume of the additional chamber is filled up with damping medium.

Solid lines A1 and A2 correspond to two dampers provided with an embodiment of an additional chamber assembly shown in Figs 3 and 4. As shown, for the piston velocities lower than the velocity activation threshold V_A, the damping force increases similarly to the characteristic of a conventional damper as the additional chamber assembly is in inactive mode of operation. After reaching the threshold V_A, the pressure in the main compression chamber exceeds the force of the blow-off spring and the blow-off valve of the additional chamber assembly turns into open position. This in turn results in decreasing the damping medium flow rate passing through the regular compression valve arrangements of the piston and base valve as a part of the damping medium flow is now directed through the channel of the blow-off valve into the additional compression chamber where it acts on a freely floating piston.

For a given configuration of the regular compression valve arrangements of the main piston assembly, the value of the velocity activation threshold V_A depends on the blow-off spring force and blow-off plate surface, the slope angle alpha_A1 and alpha_A2 depend on the surface of a blow-off channel in a blow-off valve arrangement partition, and deactivation thresholds V_D1 and V_D2 depend mainly on the height of the cylindrical section.

Fig. 6 schematically shows a force (F) vs. stroke (S) relationships for a damper provided with an embodiment of an additional chamber assembly shown in Fig. 4. The damping force is equal to zero at the ends of the rebound and compression strokes, i.e. at the extreme positions of the piston assembly within the damper tube, and reaches its maximum values in the middle of the stroke. The surface surrounded by the force vs. stroke curve is equal to the work of the damper or the amount of energy dissipated by the damper during one full cycle.

Each curve was plotted for different value of the main piston velocity. The most internal characteristic corresponds to the lowest velocity, where the velocity main piston is sufficiently slow not to cause activation of the additional chamber assembly valves. The remaining characteristics correspond to higher piston velocities exceeding the velocity activation threshold V_A. It is visible that the range of the piston stroke on which the additional chamber assembly remains in the active operation mode depends on the piston velocity and decreases along with increasing piston velocity. The end of activation mode of operation of the additional chamber assembly occurs at some displacement S when the whole chamber of the additional chamber assembly is filled up with the working fluid and the floating piston in its extreme position rests against the sealing element surrounding the shoulder sleeve.

The above embodiments of the present invention are merely exemplary. The figures are not necessarily to scale, and some features may be exaggerated or minimized. These and other factors however should not be considered as limiting the spirit of the invention, the intended scope of protection of which is indicated in appended claims.

## Claims

1. A hydraulic damper (1, 101), in particular a motor vehicle suspension damper, comprising
a tube (2, 302) filled with working liquid, inside of which a slidable piston assembly (3, 103) with rebound and compression valve assemblies (9, 10) to control the flow of working liquid passing through the piston assembly (3, 103) during rebound and compression stroke of the damper (1, 101) is placed, which is attached to a piston rod (4, 104) led outside the damper (1, 101) and divides the tube (2, 102) into main compression chamber (8, 108) and main rebound chamber (7, 107), and
at least one chamber assembly (14, 114) with a floating piston (22, 22) separating the chamber assembly (14, 114) into additional compression chamber (23, 123) and additional rebound chamber (24, 124) and comprising at least one valve arrangement (25, 125a, 125b) located between the main compression chamber (8, 108) and additional compression chamber (23, 123) and/or between the main rebound chamber (7, 107) and additional rebound chamber (24, 124), **characterised in that**, said valve arrangement comprises a blow-off valve (27, 30, 31; 127, 130, 131), which upon activation after reaching a predefined pressure threshold opens the flow of fluid from said main (7, 107; 8, 108) to said additional (24 , 124; 23, 123) chamber, and a check valve (29, 32, 32'; 129, 132, 132'), which allows return flow of fluid from said additional to said main chamber.

2. The hydraulic damper according to claim 1, **characterised in that**, said at least one valve arrangement (25, 125a) is a compression valve arrangement located between the main compression chamber (8, 108) and the additional compression chamber (23, 123).

3. The hydraulic damper according to claim 1 or 2, **characterised in that**, said at least one chamber assembly (114) is fixed to the piston rod (104) of the slidable piston assembly (103) and said at least one valve arrangement (125b) is a rebound valve arrangement located between the main rebound chamber (107) and the additional rebound chamber (124).

4. The hydraulic damper according to claim 1 or 2 or 3, **characterised in that**, said at least one chamber assembly (14) is fixed to the base valve assembly (6).

5. The hydraulic damper according to claim 1 or 2 or 3 or 4, **characterised in that**, said blow-off valve has a form of a compressed spring (27, 127) placed inside the sleeve (26, 126) located inside the additional chamber (23, 123, 124) and acting upon a blow-off plate (31, 131) pressing it against at least one channel (30, 130) in the valve arrangement partition (28, 128).

6. The hydraulic damper according to claim 1 or 2 or 3 or 4 or 5, **characterised in that**, said check valve has a form of two resilient discs (32, 32', 132, 132'), where the first disc (32, 132) rests over and closes at least one channel (29, 129) in the valve arrangement partition (28, 128) and the second disc (32', 132') is bent between the first disc (32, 132) and a resisting surface (33, 146) to press the first disc (32, 132) into a closed position.

7. The hydraulic damper according to any of preceding claims, **characterised in that**, said chamber assembly (14, 114) comprises at least one sealing element (36, 136).

8. A method of adjusting a damping properties of a hydraulic damper (1, 101), in particular of a motor vehicle suspension damper, comprising a tube (2, 102) fitted with working liquid, inside of which a slidable piston assembly (3, 103) with rebound and compression valve assemblies (9, 10) to control the flow of working liquid passing through the piston assembly (3, 103) during rebound and compression stroke of the damper (1, 101) is placed, which is attached to a piston rod (4, 104) led outside the damper (1, 101) and divides the tube (2, 102) into main compression chamber (8, 108) and main rebound chamber (7, 107), and
at least one chamber assembly (14) with a floating piston (22, 122) separating the chamber assembly (14, 114) into additional compression chamber (23, 123) and additional rebound chamber (24, 124) and comprising
at least one valve arrangement (25, 125a, 125b) located between the main compression chamber (8, 108) and additional compression chamber (23, 123) and/or between the main rebound chamber (7, 107) and additional rebound chamber (24, 124), **characterised in that**, during the compression stroke said method comprises the step of enabling flow of fluid from the main compression chamber (8, 108) to the additional compression chamber (23, 123) after reaching a predefined pressure engagement threshold in the main compression chamber (8, 108), wherein said chambers (23, 123, 8, 108) remain fluidly connected during the return rebound stroke
and/or
during the rebound stroke said method comprises the step of enabling flow of fluid from the main rebound chamber (7, 107) to the additional rebound chamber (24, 124) after reaching a predefined pressure engagement threshold in the main rebound chamber (7,107), wherein said chambers (7, 107, 24, 124) remain fluidly connected during the return compression stroke,
where
damping forces generated by the damper (1, 101) are reduced after reaching said predefined engagement threshold.

9. The method of adjusting a damping characteristic according to claim 8, **characterised in that**, said engagement threshold (V_A) and force reduction level (alpha_A) are adjusted by means of the parameters of at least one blow-off valve, preferably selected from compressed blow-off spring preload, blow-off plate surface and flow surface of a blow-off channel in the valve arrangement partition.

## Patentansprüche

1. Ein hydraulischer Stoßdämpfer (1, 101), insbesondere ein Kraftfahrzeug-Federungsstoßdämpfer, welcher aufweist
ein Rohr (2, 102), das mit einem Arbeitsfluid gefüllt ist, innerhalb von dem eine verschiebbare Kolbenanordnung (3, 103) mit Rückfederungs- und Kompressionsventilanordnungen (9, 10), um den Fluss des Arbeitsfluids zu steuern, das durch die Kolbenanordnung (3, 103) während Rückfederungs- und Kompressionshub des Stoßdämpfers (1, 101) durchläuft, platziert ist, welche an einer Kolbenstange (4, 104) außerhalb des Stoßdämpfers (1, 101) angebracht ist und das Rohr (2, 102) in eine Hauptkompressionskammer (8, 108) und eine Hauptrückfederungskammer (7, 107) trennt, und
zumindest eine Kammeranordnung (14, 114) mit einem gleitenden Kolben (22, 122), der die Kammeranordnung (14, 114) in eine zusätzliche Kompressionskammer (23, 123) und eine zusätzliche Rückfederungskammer (24, 124) trennt und zumindest eine Ventilanordnung (25, 125a, 125b) aufweist, die sich zwischen der Hauptkompressionskammer (8, 108) und der zusätzlichen Kompressionskammer (23, 123) und/oder zwischen der Hauptrückfederungskammer (7, 107) und der zusätzlichen Rückfederungskammer (24, 124) befindet, **dadurch gekennzeichnet, dass** die Ventilanordnung ein Überdruckventil (27, 30, 31; 127, 130, 131), welches bei Aktivierung, nachdem ein vordefinierter Druckschwellwert erreicht ist, den Fluss des Fluids von der Haupt- (7, 107; 8, 108) zu der zusätzlichen (24, 124; 23, 123) Kammer öffnet, und ein Rückschlagventil (29, 32, 32'; 129, 132, 132') aufweist, welches einen Rückfluss des Fluids von der zusätzlichen zu der Hauptkammer erlaubt.

2. Der hydraulische Stoßdämpfer gemäß Anspruch 1, **dadurch gekennzeichnet, dass** die zumindest eine Ventilanordnung (25, 125a) eine Kompressionsventilanordnung ist, die sich zwischen der Hauptkompressionskammer (8, 108) und der zusätzlichen Kompressionskammer (23, 123) befindet.

3. Der hydraulische Stoßdämpfer gemäß Anspruch 1 oder 2, **dadurch gekennzeichnet, dass** die zumindest eine Kammeranordnung (114) an der Kolbenstange (104) der verschiebbaren Kolbenanordnung (103) befestigt ist und dass die zumindest eine Ventilanordnung (125b) eine Rückfederungsventilanordnung ist, die sich zwischen der Hauptrückfederungskammer (107) und der zusätzlichen Rückfederungskammer (124) befindet.

4. Der hydraulische Stoßdämpfer gemäß Anspruch 1 oder 2 oder 3, **dadurch gekennzeichnet, dass** die zumindest eine Kammeranordnung (14) an der Basisventilanordnung (6) befestigt ist.

5. Der hydraulische Stoßdämpfer gemäß Anspruch 1 oder 2 oder 3 oder 4, **dadurch gekennzeichnet, dass** das Überdruckventil eine Form von einer komprimierten Feder (27, 127) hat, die innerhalb der Muffe (26, 126) platziert ist, die sich innerhalb der zusätzlichen Kammer (23, 123, 124) befindet, und die auf eine Abblasplatte (31, 131) einwirkt, wobei diese gegen einen Kanal (30, 130) in dem Ventilanordnungsteilbereich (28, 128) gedrückt wird.

6. Der hydraulische Stoßdämpfer gemäß Anspruch 1 oder 2 oder 3 oder 4 oder 5, **dadurch gekennzeichnet, dass** das Rückschlagventil eine Form von zwei elastischen Scheiben (32, 32', 132, 132') hat, wobei die erste Scheibe (32, 132) über zumindest einem Kanal (29, 129) in dem Ventilanordnungsteilbereich (28, 128) liegt und diesen verschließt und die zweite Scheibe (32', 132') zwischen der ersten Scheibe (32, 132) und einer widerstehenden Oberfläche (33, 146) gebogen ist, um die erste Scheibe (32, 132) in eine geschlossene Position zu drücken.

7. Der hydraulische Stoßdämpfer gemäß einem der vorhergehenden Ansprüche, **dadurch gekennzeichnet, dass** die Kammeranordnung (14, 114) zumindest ein Dichtelement (36, 136) aufweist.

8. Ein Verfahren zum Anpassen von Dämpfungseigenschaften eines hydraulischen Stoßdämpfers (1, 101) ), insbesondere eines Kraftfahrzeug-Federungsstoßdämpfer, welcher ein Rohr (2, 102), das mit einem Arbeitsfluid gefüllt ist, innerhalb von dem eine verschiebbare Kolbenanordnung (3, 103) mit Rückfederungs- und Kompressionsventilanordnungen (9, 10), um den Fluss des Arbeitsfluids zu steuern, das durch die Kolbenanordnung (3, 103) während Rückfederungs- und Kompressionshub des Stoßdämpfers (1, 101) durchläuft, platziert ist, welche an einer Kolbenstange (4, 104) außerhalb des Stoßdämpfers (1, 101) angebracht ist und das Rohr (2, 102) in eine Hauptkompressionskammer (8, 108) und eine Hauptrückfederungskammer (7, 107) trennt, und
zumindest eine Kammeranordnung (14, 114) mit einem gleitenden Kolben (22, 122) aufweist, der die Kammeranordnung (14, 114) in eine zusätzliche Kompressionskammer (23, 123) und eine zusätzliche Rückfederungskammer (24, 124) trennt und zumindest eine Ventilanordnung (25, 125a, 125b) aufweist, die sich zwischen der Hauptkompressionskammer (8, 108) und der zusätzlichen Kompressionskammer (23, 123) und/oder zwischen der Hauptrückfederungskammer (7, 107) und der zusätzlichen Rückfederungskammer (24, 124) befindet, **dadurch gekennzeichnet, dass** das Verfahren während des Kompressionshubs den Schritt des Ermöglichens von Fluss des Fluids von der Hauptkompressionskammer (8, 108) zu der zusätzlichen Kompressionskammer (23, 123) aufweist, nachdem ein vordefinierter Druckkupplungsschwellwert in der Hauptkompressionskammer (8, 108) erreicht ist, wobei die Kammern (23, 123, 8, 108) während des Umkehr-Rückfederungshubs fluid verbunden bleiben
und/oder
dass das Verfahren während des Rückfederungshubs den Schritt des Ermöglichens von Fluss des Fluids von der Hauptrückfederungskammer (7, 107) zu der zusätzlichen Rückfederungskammer (24, 124) aufweist, nachdem ein vordefinierter Druckkupplungsschwellwert in der Hauptrückfederungskammer (7, 107) erreicht ist, wobei die Kammern (23, 123, 8, 108) während des Umkehr-Kompressionshubs fluid verbunden bleiben,
wobei
Dämpfungskräfte, die durch den Stoßdämpfer (1, 101) erzeugt werden, reduziert werden, nachdem der vordefinierte Kupplungsschwellwert erreicht ist.

9. Das Verfahren zum Anpassen einer Dämpfungseigenschaft gemäß Anspruch 8, **dadurch gekennzeichnet, dass** der Kupplungsschwellwert (V_A) und Kraftreduzierungspegel (alpha_A) mit Hilfe von den Parametern von zumindest einem Abblasventil angepasst werden, vorzugsweise ausgewählt auf komprimierter Abblasfedervorspannung, Abblasplattenoberfläche und Flussoberfläche eines Abblaskanals in dem Ventilanordnungsteilbereich.

## Revendications

1. Amortisseur hydraulique (1,101), en particulier un amortisseur de suspension de voiture automobile comprenant
un tube (2,302) rempli de liquide de fonctionnement, à l'intérieur duquel est placé un ensemble de piston coulissant (3,103) avec des ensembles de soupapes de détente et de compression (9,10) pour réguler l'écoulement de liquide de fonctionnement passant à travers l'ensemble de piston (3,103) durant la course de détente et de compression de l'amortisseur (1,101), ensemble qui est attaché à une tige de piston (4,104) guidée hors de l'amortisseur (1,101) et divise le tube (2.302) en une chambre de compression principale (8,108) et une chambre de détente principale (7,107) et
au moins un ensemble de chambres (14,114) avec un piston flottant (22,22) divisant l'ensemble de chambres (14,114) en une chambre de compression supplémentaire (23,223) et une chambre de détente supplémentaire (24,224) et comprenant au moins un arrangement de soupapes (25, 1254, 1256) qui se situe entre la chambre de compression principale (8,108) et la chambre de compression supplémentaire (23,123) et/ou entre la chambre de détente principale (7,107) et la chambre de détente supplémentaire (24,124), **caractérisé en ce que** ledit arrangement de soupapes comprend une soupape de décharge (27, 30, 31 ; 127, 130, 131) qui, une fois un seuil de pression prédéfini atteint, ouvre, sur activation, l'écoulement de fluide depuis ladite chambre principale (7, 107; 8, 108) à ladite chambre supplémentaire (24, 124; 23, 123) et un clapet anti-retour (29, 32, 32' ; 129, 132, 132') qui permet l'écoulement inverse de fluide depuis ladite chambre supplémentaire à ladite chambre principale.

2. Amortisseur hydraulique suivant la revendication 1, **caractérisé en ce que** ledit au moins un arrangement de soupapes (25, 125a) est un arrangement de soupapes de compression qui se situe entre la chambre de compression principale (8, 108) et la chambre de compression supplémentaire (23, 123).

3. Amortisseur hydraulique suivant la revendication 1 ou 2, **caractérisé en ce que** ledit au moins un ensemble de chambres (114) est fixé à la tige de piston (104) de l'ensemble de piston coulissant (103) et ledit au moins un arrangement de soupapes (125b) est un arrangement de soupapes de détente qui se situe entre la chambre de détente principale (107) et la chambre de détente supplémentaire (124).

4. Amortisseur hydraulique suivant la revendication 1 ou 2 ou 3, **caractérisé en ce que** ledit au moins un ensemble de chambres (14) est fixé à l'ensemble de soupapes de base (6).

5. Amortisseur hydraulique suivant la revendication 1 ou 2 ou 3 ou 4, **caractérisé en ce que** ledit clapet anti-retour présente la forme d'un ressort comprimé (27, 127) placé à l'intérieur de la manche (26, 126) qui se situe à l'intérieur de la chambre supplémentaire (23, 123, 124) et agit sur un clapet anti-retour (31, 131) en pressant celui-ci contre au moins un canal (30, 130) dans la cloison de l'arrangement de soupapes (28, 128).

6. Amortisseur hydraulique suivant la revendication 1 ou 2 ou 3 ou 4 ou 5, **caractérisé en ce que** ledit clapet anti-retour présente la forme de deux disques résilients (32, 32', 132, 132'), dont le premier (32, 132) reste au-dessus et opère la fermeture d'au moins un canal (29,129) dans la cloison de l'arrangement de soupapes (28, 128) et le second disque (32', 132') est courbé entre le premier disque (32, 132) et une surface résistante (33, 146) afin de presser le premier disque (32, 132) de manière à ce qu'il adopte une position fermée.

7. Amortisseur hydraulique suivant une quelconque des revendications précédentes, **caractérisé en ce que** ledit ensemble de chambres (14, 114) comprend au moins un élément d'étanchéité (36, 136).

8. Procédé d'ajustement des propriétés d'amortissement d'un amortisseur hydraulique (1,101) en particulier d'un amortisseur de suspension de véhicule automobile, comprenant un tube (2,02) rempli de liquide de fonctionnement, à l'intérieur duquel est placé un ensemble de piston coulissant (3,103) avec des ensembles de soupapes de détente et de compression (9,10) pour réguler l'écoulement de liquide de fonctionnement passant à travers l'ensemble de piston (3,103) durant la course de détente et de compression de l'amortisseur (1,101), ensemble qui est attaché à une tige de piston (4,104) guidée hors de l'amortisseur (1,101) et divise le tube (2,102) en une chambre de compression principale (8,108) et une chambre de détente principale (7,107) et au moins un ensemble de chambres (14) avec un piston flottant (22, 122) séparant l'ensemble de chambres (14, 114) en une chambre de compression supplémentaire (23,123) et une chambre de détente supplémentaire (24,124) et comprenant au moins un arrangement de soupapes (25, 125a, 125b) qui se situe entre la chambre de compression principale (8,108) et la chambre de compression supplémentaire (23,123) et/ou entre la chambre de détente principale (7,107) et la chambre de détente supplémentaire (24,124), **caractérisé en ce que** durant le coup de compression, ledit procédé comprend l'étape consistant à permettre l'écoulement de fluide depuis la chambre de compression principale (8,108) vers la chambre de compression supplémentaire (23,123) après avoir atteint un seuil de pression prédéfini dans la chambre de compression principale (8,108), procédé dans lequel lesdites chambres (23, 123,8, 108) restent connectées fluidiquement durant la course de détente inverse et/ou durant le coup de détente, ledit procédé comprenant l'étape consistant à permettre l'écoulement de fluide depuis la chambre de détente principale (7,107) à la chambre de détente supplémentaire (24,124) après avoir atteint un seuil de pression prédéfini dans la chambre de détente principale (7,107), procédé dans lequel lesdites chambres (7,107, 24, 124) restent connectées fluidiquement durant la course de compression inverse, les forces amortissantes générées par l'amortisseur (1, 101) étant réduites après avoir atteint ledit seuil de pression prédéfini.

9. Procédé d'ajustement d'une caractéristique d'amortissement suivant la revendication 8, **caractérisé en ce que** lesdits seuil d'engagement (V_A) et niveau de réduction de force (alpha_A) sont ajustés au moyen des paramètres d'au moins une soupape de décharge sélectionnée de préférence parmi le préchargement du ressort de décharge, la surface de la plaque de décharge et la surface d'écoulement d'un canal de décharge dans la cloison de l'arrangement de soupapes.
